# FASCICULE DE BREVET EUROPEEN

(11) **EP 2 593 316 B1**
(45) Date de publication et mention de la délivrance du brevet: **14.11.2018**
(21) Numéro de dépôt: 11731351.0
(22) Date de dépôt: 12.07.2011
(51) Int. Cl.: B60C 11/12, B60C 11/03, B60C 11/24, B29D 30/06

(54) **BANDE DE ROULEMENT POUR PNEUMATIQUE COMPORTANT UN INDICATEUR D'USURE**
REIFENPROFIL MIT ABNUTZUNGSINDIKATOR
TREAD FOR A TIRE

(30) Priorité: 12.07.2010 FR 1055662
(43) Date de publication de la demande: 22.05.2013
(73) Titulaire: Compagnie Générale des Etablissements Michelin, 63000 Clermont-Ferrand (FR)
(72) Inventeur: EMORINE, Hélène, 63040 Clermont-Ferrand Cedex 9 (FR); PETITJEAN, Sylvain, 63040 Clermont-Ferrand Cedex 9 (FR); LICENSE, William, 63040 Clermont-Ferrand Cedex 9 (FR)
(74) Mandataire: Demaure, Pierre-Yves
(86) Numéro de dépôt international: PCT/EP2011/061861
(87) Numéro de publication internationale: WO 2012/007464

(56) Documents cités:
- EP-A2- 1 066 991
- WO-A2-2007/102790
- JP-A- 2005 067 407
- US-A- 3 770 040
- US-A1- 2008 023 116

## Description

### DOMAINE DE L'INVENTION

La présente invention concerne une bande de roulement d'un pneumatique pour véhicule de tourisme comportant des moyens particuliers pour alerter un observateur sur l'état d'usure de ce pneumatique.

### ETAT DE LA TECHNIQUE

Le document EP1066991 A2 divulgue une bande de roulement d'un pneumatique selon le préambule de la revendication 1 pourvue d'une pluralité d'incisions (« sipe » en anglais) permettant d'obtenir une information sur l'état d'usure du pneumatique au cours de l'utilisation dudit pneumatique.

Par pneumatique, on entend tous les types de bandages élastiques soumis au cours d'un roulage à une pression interne ou non.

Par bande de roulement d'un pneumatique, on entend une quantité de composition caoutchouteuse délimitée par des surfaces latérales et par deux surfaces principales dont une est destinée à entrer en contact avec un sol lorsque le pneumatique roule.

Par surface de roulement, on entend la surface formée par les points de la bande de roulement du pneumatique qui entrent en contact avec le sol lorsque le pneumatique roule.

Par incision, on entend une découpure (« cut-out » en anglais) dont les faces de matière se touchent dans les conditions usuelles de roulage. Généralement, la largeur d'une incision est inférieure à 2 mm.

Dans le document EP1066991 A2, des incisions s'étendant dans la profondeur de la bande de roulement débouchent sur la surface de roulement pour former le message « very good condition ».

L'incision formant le mot « very » s'étend dans une profondeur moins importante que le mot « good ». De la même manière, le mot « good » s'étend dans une profondeur moins importante que le mot « condition ».

Ainsi, à l'état neuf, il est possible de lire le message « very good condition » en entier sur la surface de roulement.

Lorsque la bande de roulement du pneumatique atteint un premier taux d'usure, le mot « very » n'est plus lisible sur la surface de roulement.

Par taux d'usure, on entend le ratio entre une épaisseur que la bande de roulement a perdu par l'usure et l'épaisseur totale que la bande de roulement peut perdre avant de devoir être remplacée.

Ainsi un taux d'usure de 25% signifie que la bande de roulement a perdu un quart de la composition caoutchouteuse à user.

Dans le document EP1066991 A2, lorsque la bande de roulement du pneumatique atteint un second taux d'usure supérieur au premier taux d'usure, le mot « good » n'est plus lisible sur la surface de roulement.

Enfin, lorsque la bande de roulement du pneumatique atteint un troisième taux d'usure supérieur au second taux d'usure, le mot « condition » n'est plus lisible sur la surface de roulement.

La disparition de l'ensemble du message « very good condition » sur la surface de roulement signifie qu'il est nécessaire de remplacer le pneumatique.

L'indicateur d'usure divulgué dans le document EP1066991 A2 présente un certain nombre d'inconvénients.

Tout d'abord, la disparition du message sur la surface de roulement peut ne pas suffisamment alerter l'observateur de la nécessité de changer de pneumatique. En effet, la disparition du message rend visuellement plus homogène la surface de roulement. L'observateur peut alors croire à tord que le pneumatique est toujours opérationnel puisque rien ne le lui indique le contraire.

En outre, les incisions formant le message peuvent être comblées par de la boue ou de la poussière au cours de l'utilisation du pneumatique. En conséquence, la lisibilité du message sur la surface de roulement est limitée.

Enfin, l'utilisation d'un indicateur d'usure conforme au document de l'art antérieur nécessite de pourvoir la bande de roulement d'une pluralité d'incisions, ceci peut alors entraîner une usure irrégulière de la bande de roulement à proximité de ces incision.

Le document US3770040 montre une bande de roulement avec une cavité interne et une incision prenant naissance sur la cavité, où un élément est disposé dans le fond de ladite cavité pour devenir visible qu'après un état avancé d'usure pour alerter un observateur.

Le document WO2007/102790-A2
montre une variante d'alerter un observateur de l'usure de la bande de roulement à travers d'incisions dans ladite bande, ou des messages différents apparaissent lorsque la bande passe d'un état d'usure à un autre.

Il existe donc un besoin de prévoir un indicateur d'usure permettant de résoudre les problèmes exposés ci-dessus.

### RESUME DE L'INVENTION

L'invention concerne une bande de roulement pour pneumatique pour véhicule de tourisme comportant une surface de roulement destinée à venir en contact avec un sol pendant le roulage dudit pneumatique. La bande de roulement comprend au moins une cavité interne de forme générale allongée de longueur totale LC et de largeur WC et une incision de largeur inférieure à 2 mm prenant naissance en partie ou en totalité sur la cavité, ladite incision prolongeant cette cavité sur toute sa longueur LC en s'étendant radialement vers l'extérieur pour déboucher sur la surface de roulement. La cavité comporte un fond et deux parois latérales entourant ce fond et s'étendant dans la longueur LC de la cavité. Le fond comprend un message à destination d'un observateur du pneumatique, ledit message étant un groupe de symboles formant une unité de sens. Le message est distant d'au moins une paroi latérale de la cavité. La distance entre le message et cette paroi latérale est au moins égale à 5% de la largeur W de la cavité. Le message fait saillie depuis le fond de la cavité, ledit message étant adapté pour être moulé par une lamelle d'un moule pour pneumatique ou le message est découpé dans le fond de ladite cavité.

Lorsque la bande de roulement atteint un certain niveau d'usure un message apparaît. On garantit ainsi un certain effet de surprise avec l'apparition du message. L'observateur n'est en effet pas habitué à la présence d'un tel message sur la surface de roulement. Cet observateur est donc interpellé par la présence du message et devient plus réceptif à l'idée de devoir changer le pneumatique usé.

Le message permet donc d'alerter plus efficacement l'observateur sur l'usure avancé du pneumatique.

En outre, l'incision protège le message de la boue ou de la poussière au cours de l'utilisation du pneumatique.

Enfin, la distance existante entre le message et une paroi latérale de la cavité améliore la visibilité de ce message lorsque la bande de roulement atteint un certain taux d'usure, par exemple lorsque la bande de roulement atteint un taux d'usure d'au moins 90%.

De préférence, le message présente une rugosité différente de la rugosité du fond de la cavité de manière à accentuer la visibilité du message pour faire contraste par rapport à ce fond.

On améliore la visibilité du message par rapport au reste de la bande de roulement.

En outre ou alternativement, une surface du message comporte une pluralité de brins configurés de manière à accentuer la visibilité du message pour faire contraste par rapport au fond de la cavité.

On améliore davantage la visibilité du message par rapport au reste de la bande de roulement.

En outre ou alternativement, une surface du message comporte une pluralité de trous configurés de manière à accentuer la visibilité du message pour faire contraste par rapport au fond de la cavité.

On améliore davantage la visibilité du message par rapport au reste de la bande de roulement.

En outre ou alternativement, le message est coloré de manière à accentuer la visibilité du message pour faire contraste par rapport au fond de la cavité.

On améliore davantage la visibilité du message par rapport au reste de la bande de roulement.

De préférence, le message est disposé sur le fond de la cavité sans être radialement à l'aplomb d'une intersection de l'incision avec la cavité.

Dans le cas où le message est aligné avec l'incision, celui-ci peut apparaître progressivement à l'observateur, et ceci avant même que l'usure de la bande de roulement n'atteigne le seuil d'usure prédéterminé. En décalant le message par rapport à l'incision de sorte à ce qu'il ne soit pas radialement à l'aplomb de l'intersection de la cavité et de l'incision, on favorise une apparition soudaine dudit message. Le message permet alors d'alerter plus efficacement l'observateur sur l'usure du pneumatique.

De préférence, l'incision fait un angle compris entre 45° et 60° avec une perpendiculaire à la surface de roulement et passant par un point d'intersection de l'incision avec la cavité.

On favorise alors une apparition soudaine du message.

De préférence, la bande de roulement comprend au moins deux cavités et une incision reliant lesdites cavités, chaque cavité comportant un message, les cavités étant disposées radialement à des distances différentes par rapport à la surface de roulement de sorte à ce que les messages associés auxdites cavités apparaissent sur le pneumatique à différents taux d'usure de la bande de roulement, chaque message donnant une information associée à un taux d'usure faisant apparaître ledit message.

Il est ainsi possible de faire apparaître un message lorsque la bande de roulement atteint un taux d'usure intermédiaire. L'observateur peut alors connaître de manière simple et pratique un état d'usure intermédiaire de la bande de roulement.

Un autre objet de l'invention concerne un élément moulant pour un moule pour pneumatique pour véhicule de tourisme comportant une bande de roulement. L'élément moulant comprend un renflement de forme générale allongée de longueur totale LR et de largeur WR et une lame métallique de largeur inférieure à 2 mm solidaire de ce renflement au niveau d'une extrémité de ladite lame, ladite lame métallique prolongeant le renflement sur toute sa longueur LC au niveau d'une partie supérieure dudit renflement. Le renflement de l'élément moulant comporte une partie inférieure opposée à la partie supérieure et deux parties latérales entourant la partie inférieure et s'étendant dans la longueur LC du renflement. La partie inférieure comporte une pluralité de protubérances ou une pluralité de creux destinés à mouler un message dans la bande de roulement du pneumatique à destination d'un observateur du pneumatique. La pluralité de protubérances ou la pluralité de creux est distante d'au moins un bord de la partie inférieure formé par l'intersection de la partie inférieure avec une partie latérale du renflement, la distance entre la pluralité de protubérances ou la pluralité de creux et ledit bord étant au moins égale à 5% de la largeur WR du renflement.

En variante, la partie inférieure du renflement comprend une pluralité de trous dans le fond des creux pour mouler des brins sur le message.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la figure 1 représente une vue partielle de la surface de roulement d'une bande de roulement conforme à l'invention, ladite bande de roulement étant dans un état d'usure où des messages sont visibles;
- la figure 2 représente en perspective une coupe d'une partie de la bande de roulement conforme à l'invention à l'état neuf, ladite coupe s'étendant dans la longueur du message de la figure 1, ledit message étant associé avec une incision, ledit message et ladite incision étant configurés selon un premier mode de configuration ;
- la figure 3a représente une vue en perspective d'une partie de la bande de roulement conforme à l'invention dans un état neuf ;
- la figure 3b représente une vue en perspective d'une partie de la bande de roulement conforme à l'invention dans un état d'usure intermédiaire ;
- la figure 3c représente une vue en perspective d'une partie de la bande de roulement conforme à l'invention dans un état d'usure avancé, dans lequel un message est totalement visible ;
- la figure 4 représente une vue en perspective d'une lamelle adaptée pour mouler le message de la figure 3c.
- la figure 5 représente de manière schématique, une vue en coupe circonférentielle de la bande de roulement de la figure 3a comportant un message et une incision configurés selon un second mode de configuration;
- la figure 6 représente de manière schématique, une vue en coupe circonférentielle de la bande de roulement de la figure 3a comportant un message et une incision configurés selon une troisième mode de configuration.

Dans la description qui va suivre, des éléments sensiblement identiques ou similaires seront désignés par des références identiques.

De manière connue en soi, une bande de roulement d'un pneumatique comprend une surface de roulement destinée à venir en contact avec un sol pendant le roulage dudit pneumatique.

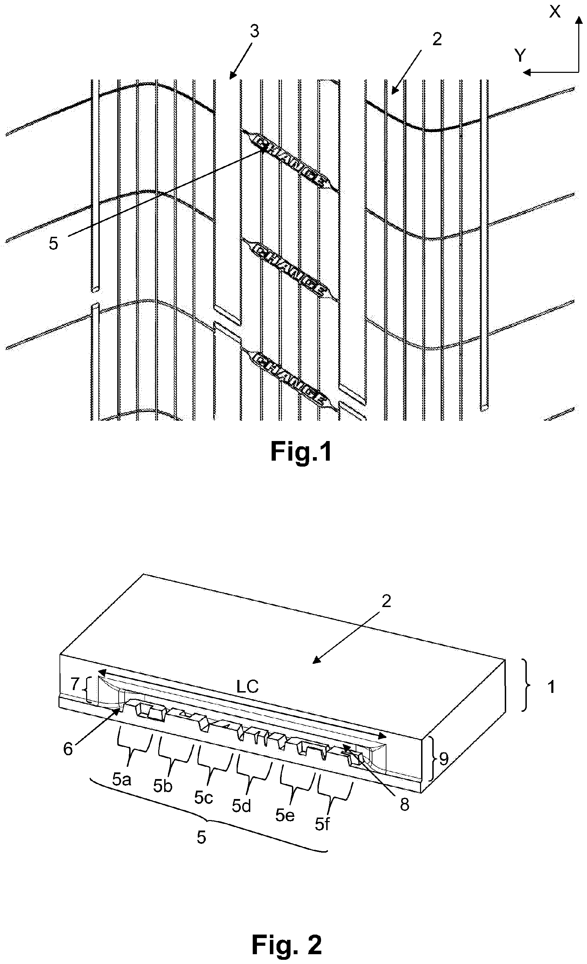

La figure 1 présente une vue partielle d'une telle surface de roulement 2.

La surface de roulement 2 comprend ici une rainure 3 (« groove » en anglais).

Par rainure, on entend une découpure dont les faces de matière ne se touchent pas dans les conditions usuelles de roulage. La largeur d'une rainure est ici supérieure ou égale à 2 mm.

La rainure 3 s'étend ici selon une direction circonférentielle X.

Par direction circonférentielle, on entend une direction tangente à un cercle dont le centre est sur un axe de rotation d'un pneumatique pourvu de la bande de roulement.

La surface de roulement 2 est ici dans un état d'usure avancé.

Dans cet état d'usure, la surface de roulement 2 comprend une pluralité de messages 5 s'étendant selon une direction oblique faisant un angle prédéterminé supérieur à 0 degré et inférieur à 90 degrés avec une direction transversale Y.

Par direction transversale, on entend une direction parallèle à l'axe de rotation dudit pneumatique.

Dans une variante de réalisation, le message s'étend exclusivement selon la direction circonférentielle X.

Dans une autre variante de réalisation, le message s'étend exclusivement selon la direction transversale Y.

Par message, on entend un groupe de symboles formant une unité de sens.

Le message comprend ici des symboles de l'alphabet latin formant le mot « CHANGE ».

En variante, le message peut être un symbole d'avertissement. Par exemple, le message peut être un point d'exclamation inscrit dans un triangle ou une forme de visage avec une expression négative.

Le mot « CHANGE » donne l'information à un observateur qu'il est temps de remplacer le pneumatique.

Le message 5 est ainsi directement compréhensible par l'observateur sans qu'il soit nécessaire pour lui de consulter une quelconque référence.

Le message 5 comprend ici un seul mot.

Dans une variante de réalisation, le message 5 peut comprendre un groupe de mots.

La figure 2 représente en perspective une coupe d'une partie de la bande de roulement au niveau du message 5.

La bande de roulement 1 comprend une cavité 7 disposée radialement à l'intérieur de la bande de roulement 1. La cavité présente une forme générale allongée de longueur totale LC et de largeur WC. Plus particulièrement, la cavité comprend un fond 6 et deux parois latérales 8 entourant ce fond. Une seule paroi latérale 8 est ici représentée.

La bande de roulement 1 comprend également une incision 9 par laquelle la cavité 7 débouche sur la surface de roulement 2.

Par incision, on entend une découpure dont les faces de matière se touchent dans les conditions usuelles de roulage. La largeur d'une incision est ici inférieure à 2 mm.

L'incision 9 prend naissance sur la cavité 7, c'est-à-dire que l'incision débouche dans la cavité mais ne se prolonge pas radialement au-delà de la cavité. Plus particulièrement, l'incision prend naissance ici partiellement sur la cavité, la longueur de l'incision 9 étant supérieure à la longueur LC de la cavité 7. En variante, la longueur de l'incision et la longueur de la cavité sont identiques et l'incision prend totalement naissance sur la cavité.

La bande de roulement 1 comprend également un message 5 à destination d'un observateur.

Le message 5 fait ici saillie depuis le fond 6 de la cavité et est distant des parois latérales de la cavité. Plus particulièrement, le message comprend une pluralité de protubérances 5a, 5b, 5c, 5d, 5e, 5f chacune desdites protubérances formant respectivement une lettre du mot « CHANGE ».

En variante, le message 5 est découpé dans le fond 6 de la cavité.

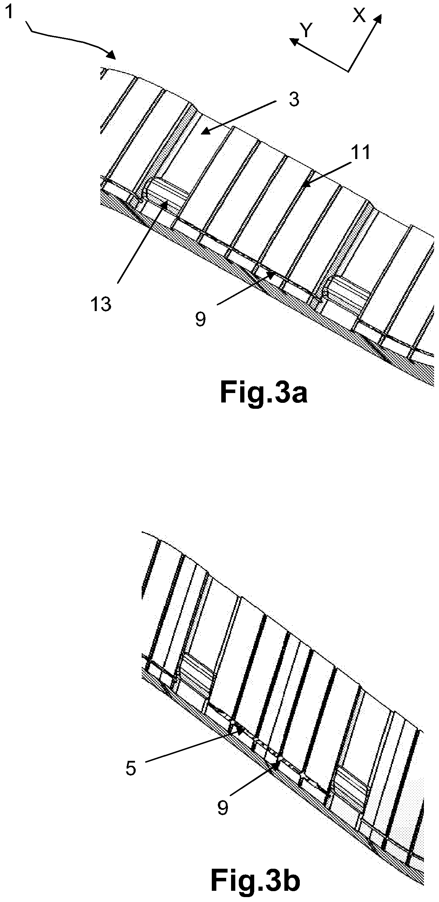

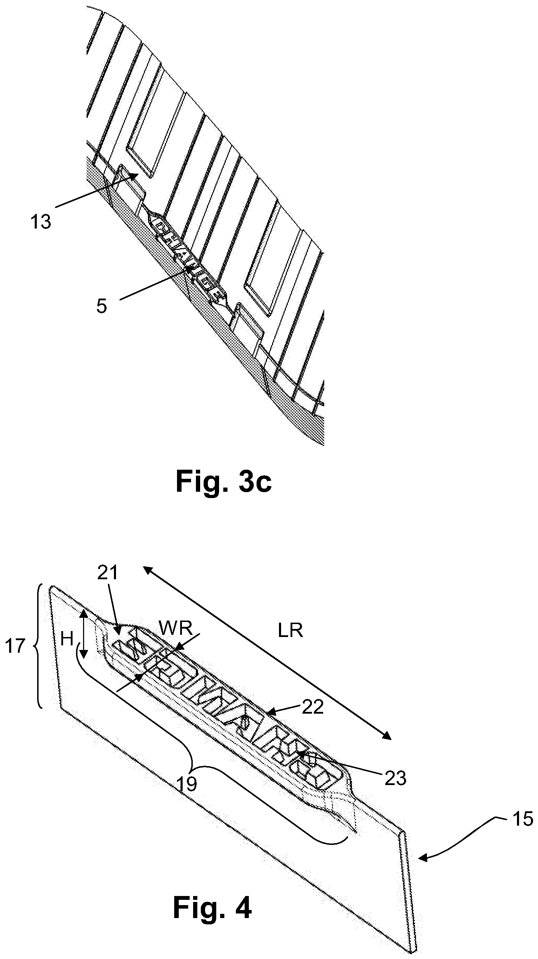

Les figures 3a, 3b, 3c représentent différentes vues partielles en perspective de ce que peut voir un observateur regardant la surface de roulement du pneumatique, à différents taux d'usure de la bande de roulement.

La figure 3a représente plus particulièrement ce que peut voir l'observateur lorsque la bande de roulement est à l'état neuf.

Dans l'exemple de la figure 3a, la bande de roulement 1 comprend une incision transversale 9 débouchant dans la cavité 7 et des incisions circonférentielles 11.

L'incision transversale 9 s'étend ici selon la direction transversale Y.

Les incisions circonférentielles s'étendent ici selon la direction circonférentielle X.

La bande de roulement 1 comprend également une rainure 3 et un témoin d'usure 13 faisant saillie depuis le fond de ladite rainure 3.

Le témoin d'usure 13 permet de contrôler l'usure de la bande de roulement du pneumatique 1. Il est ainsi possible de comparer l'épaisseur de la bande de roulement 2 avec la hauteur limite du témoin d'usure 13. Lorsque l'épaisseur de la bande de roulement atteint la hauteur limite du témoin d'usure 13, il est nécessaire de remplacer le pneumatique.

Le témoin d'usure 13 n'est pas un message au sens de l'invention. En effet, le témoin d'usure 13 n'est pas un groupe de symboles formant une unité de sens. En outre, le témoin d'usure 13 est toujours visible par l'observateur et ceci quelque soit le taux d'usure de la bande de roulement 1.

On notera que la hauteur limite du témoin d'usure est de l'ordre de 1,6 mm.

La figure 3b représente ce que peut voir l'observateur lorsque la bande de roulement est à moitié usée.

Dans cette figure, le message 5 est en partie visible par l'observateur. Cependant à ce taux d'usure, il n'est pas possible pour un observateur de comprendre distinctement le message 5.

La figure 3c représente ce que peut voir l'observateur lorsque la bande de roulement atteint un taux d'usure de 90%, c'est-à-dire, ici, lorsque l'épaisseur de la bande de roulement atteint la hauteur limite du témoin d'usure 13. A ce taux d'usure, le message « CHANGE » est totalement visible pour l'observateur.

Bien entendu, il est possible de choisir un taux d'usure différent pour l'apparition du message 5. Il est ainsi possible de choisir un taux d'usure inférieur à 90%, par exemple un taux d'usure de 70%. Il est également possible de choisir un taux d'usure supérieur à 90%, par exemple un taux d'usure de 95%.

La figure 4 présente une vue en perspective d'une lamelle 15 adaptée pour mouler le message de la figure 3c.

La lamelle 15 comprend une lame métallique 17 également appelée corps 17 et renflement 19 également appelé tête. La tête 19 est ici venue de matière avec le corps 17. La tête 19 est adaptée pour mouler la cavité contenant le message. Le corps 17 est adapté pour mouler l'incision 9 par laquelle la cavité débouche.

De manière préférentielle, la hauteur H de la tête 19 correspond à la hauteur du témoin d'usure de la figure 3c. Ainsi lorsque l'épaisseur de la bande de roulement est inférieure ou égale à 1,6 mm, le message 5 est totalement visible pour l'observateur.

La tête 19 comprend une partie inférieure comportant une surface de moulage 21 et des creux 23 formant des parties en retrait par rapport à la surface de moulage 21. La surface de moulage 21 est adaptée pour mouler le fond de la cavité. Les parties en retrait 23 sont adaptées pour mouler les différentes lettres du message 5.

De manière préférentielle, la profondeur des parties en retrait 23 est supérieure à 1 mm. Les différentes lettres du message 5 moulées par la lamelle 15 sont ainsi mises en relief par rapport au fond de la cavité.

Dans une variante de réalisation, la tête 19 comporte des protubérances faisant saillie à partir de la surface de moulage 21 pour mouler les lettres du message 5. Ces lettres forment alors des creux dans le fond de la cavité.

La tête 19 comprend également des parties latérales. Les parties en retrait 23 adaptées pour mouler les différentes lettres du message 5 sont distantes d'au moins un bord 22 de la partie inférieure formé par l'intersection de cette partie inférieure avec une partie latérale du renflement. La distance entre les parties en retrait 23 et ce bord 22 est au moins égale à 5 % de la largeur WR du renflement.

On notera que la lamelle 15 peut être formée par la technique dite de fusion laser sélective (« Selective Laser Melting » en anglais). Avec cette technique, la lamelle est produite par fusion sélective d'une poudre formée de grains à l'aide d'un faisceau laser.

Dans un mode de réalisation particulier, la rugosité du fond des parties en retrait 23 est différente de la rugosité de la surface de moulage 21. Par exemple, la rugosité du fond des parties en retrait 23 est supérieure à la rugosité de la surface de moulage 21. Ainsi, la rugosité du fond des parties en retrait 23 peut être comprise entre 0,005 mm et 0,02 mm et la rugosité de la surface de moulage 21 peut être comprise entre 0,002 mm et 0,003 mm.

Dans une variante de réalisation, la rugosité du fond des parties en retrait 23 est inférieure à la rugosité de la surface de moulage 21.

Par cette différence de rugosité, le message formé fait contraste par rapport à au fond de la cavité, ce qui accroît la visibilité du message.

On notera que la fusion laser sélective est particulièrement adaptée pour réaliser des différences de rugosité.

Dans une variante de réalisation, le fond des parties en retrait 23 comprend une pluralité de trous configurés de manière à former des brins sur les protubérances de manière à accentuer la visibilité du message. Pour plus d'informations sur les caractéristiques de ces brins, il est fait expressément référence au document WO 2007/045425.

On notera qu'il est possible d'obtenir une visibilité du message équivalente en disposant des brins sur le fond des parties en retrait 23 de manière à former des trous dans les protubérances formant le message.

Dans une variante de réalisation, le message 5 est coloré. Pour cela on place une bande de couleur sur la bande de roulement du pneumatique avant que celle-ci ne soit moulée dans une presse de vulcanisation.

Une fois le pneumatique placé dans le moule de vulcanisation, la lamelle 15 va enfoncer une partie de la bande de couleur dans la bande de roulement. La couleur va alors se retrouver au niveau des protubérances formant le message.

Dans le mode de réalisation de la figure 3b, le message 5 est placé dans la cavité de sorte à être centré par rapport à l'incision 9. Plus particulièrement, le message est distant des deux parois latérales de la cavité et la distance entre le message et chacune desdites parois latérales est au moins égale à 5% de la largeur de la cavité.

Cette disposition particulière du message pourrait cependant entraîner une certaine confusion dans l'esprit de l'observateur.

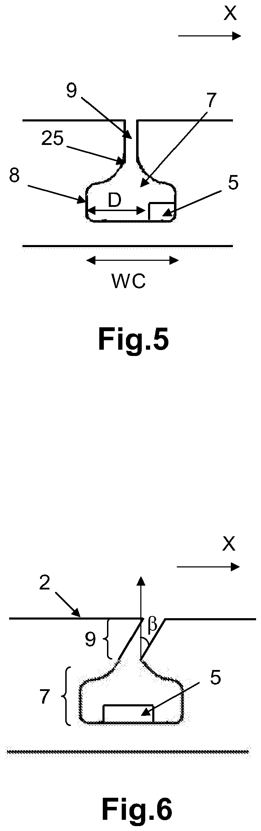

Pour remédier à ce problème, il est proposé à la figure 5, que le message 5 ne soit pas radialement à l'aplomb de l'intersection 25 de la cavité 7 et de l'incision 9 mais décalé par rapport à ladite incision 9. Ainsi, le message 5 ne devient véritablement visible que lorsque l'usure de la bande de roulement atteint l'intersection 25. On garantit ainsi un effet de surprise supplémentaire dans l'apparition du message. Dans le mode de réalisation particulier de la figure 5, le message est venu de matière avec une paroi latérale de la cavité 7 et est distant de l'autre paroi latérale 8 de la cavité. La distance D entre le message 5 et cette paroi latérale 8 est au moins égale à 5% de la largeur WC de la cavité.

Il est également proposé à la figure 6 que l'incision 9 soit inclinée par rapport à la surface de roulement 2 d'un angle β compris entre 45° et 60°.

Ainsi, le message ne devient véritablement visible que lorsque l'usure de la bande de roulement atteint un point d'intersection de l'incision 9 avec la cavité 7. On favorise davantage une apparition soudaine du message sur la bande de roulement.

La présente invention n'est pas limitée aux exemples de réalisations décrits.

Ainsi, la bande de roulement peut comprendre au moins deux cavités disposées radialement à des distances différentes par rapport à la surface de roulement. Les cavités comportent des messages différents. En conséquence, les messages associés aux cavités apparaissent sur le pneumatique à différents taux d'usure de la bande de roulement, chaque message apportant une information associée à l'usure faisant apparaître ledit message.

Toutes les combinaisons dans la réalisation des messages sont possibles.

Par exemple, il est possible d'avoir des messages ayant des couleurs différentes.

Dans une variante de réalisation, la bande de roulement comprend un groupe de messages apparaissant à un même taux d'usure. Le groupe de message comporte, par exemple, le mot « CHANGE» ainsi que des traductions de ce mot dans différentes langues. Les messages peuvent être alignés sur la surface de roulement, par exemple les messages sont alignés selon la direction circonférentielle.

## Revendications

1. Bande de roulement pour pneumatique pour véhicule de tourisme comportant une surface de roulement (2) destinée à venir en contact avec un sol pendant le roulage dudit pneumatique, ladite bande de roulement comprenant au moins une cavité interne (7) de forme générale allongée de longueur totale LC et de largeur WC et une incision (9) de largeur inférieure à 2 mm prenant naissance en partie ou en totalité sur la cavité, ladite incision prolongeant cette cavité sur toute sa longueur LC en s'étendant radialement vers l'extérieur pour déboucher sur la surface de roulement **caractérisée en ce que** la cavité comporte un fond (6) et deux parois latérales entourant ce fond et s'étendant dans la longueur LC de la cavité, ledit fond comprenant un message (5) à destination d'un observateur du pneumatique, ledit message étant un groupe de symboles formant une unité de sens et **en ce que** le message est distant d'au moins une paroi (8) latérale de la cavité, la distance entre le message (5) et ladite paroi latérale étant au moins égale à 5% de la largeur WC de la cavité et **en ce que** le message (5) fait saillie depuis le fond (6) de la cavité, ledit message étant adapté pour être moulé par une lamelle (15) d'un moule pour pneumatique ou le message (5) est découpé dans le fond (6) de la cavité.

2. Bande de roulement selon la revendication 1 **caractérisée en ce que** le message (5) présente une rugosité différente de la rugosité du fond (6) de la cavité de manière à accentuer la visibilité du message pour faire contraste par rapport à ce fond.

3. Bande de roulement selon l'une quelconque des revendications 1 ou 2 **caractérisée en ce que** le message (5) comporte une pluralité de brins configurés de manière à accentuer la visibilité du message pour faire contraste par rapport au fond (6) de la cavité (7).

4. Bande de roulement selon l'une quelconque des revendications 1 à 3 **caractérisée en ce que** le message (5) comporte une pluralité de trous configurés de manière à accentuer la visibilité du message pour faire contraste par rapport au fond (6) de la cavité (7).

5. Bande de roulement selon l'une quelconque des revendications 1 à 4 **caractérisée en ce que** le message (5) est coloré de manière à accentuer la visibilité du message (5) pour faire contraste par rapport au fond (6) de la cavité (7).

6. Bande de roulement selon l'une quelconque des revendications 1 à 5 **caractérisée en ce que** le message (5) est disposé sur le fond (6) de la cavité sans être radialement à l'aplomb d'une intersection (25) de l'incision (9) avec la cavité (7).

7. Bande de roulement selon l'une quelconque des revendications 1 à 6 **caractérisée en ce que** l'incision (9) fait un angle ( 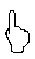 ) compris entre 45° et 60° avec une perpendiculaire à la surface de roulement et passant par un point d'intersection de l'incision (9) avec la cavité (7).

8. Bande de roulement selon l'une quelconque des revendications 1 à 7 **caractérisée en ce que** la bande de roulement comprend au moins deux cavités (7) et une incision (9) reliant lesdites cavités (7), chaque cavité (7) comportant un message (5), les cavités (7) étant disposées radialement à des distances différentes par rapport à la surface de roulement (2) de sorte à ce que les messages associés auxdites cavités apparaissent sur le pneumatique à différents taux d'usure de la bande de roulement, chaque message donnant une information associée à un taux d'usure.

9. Elément moulant pour un moule pour pneumatique pour véhicule de tourisme comportant une bande de roulement, ledit élément moulant (15) comprenant un renflement (19) de forme générale allongée de longueur totale LR et de largeur WR et une lame métallique (17) de largeur inférieure à 2 mm solidaire de ce renflement au niveau d'une extrémité de ladite lame, ladite lame métallique prolongeant le renflement sur toute sa longueur LR au niveau d'une partie supérieure dudit renflement **caractérisé en ce que** le renflement de l'élément moulant comporte une partie inférieure opposée à la partie supérieure et deux parties latérales entourant la partie inférieure et s'étendant dans la longueur LR du renflement, ladite partie inférieure comportant une pluralité de protubérances ou une pluralité de creux (23) destinés à mouler un message dans la bande de roulement (2) du pneumatique à destination d'un observateur du pneumatique et **en ce que** la pluralité de protubérances (5a-5f) ou la pluralité de creux est distante d'au moins un bord (22) de la partie inférieure formé par l'intersection de ladite partie inférieure avec une partie latérale du renflement, la distance entre la pluralité de protubérances ou la pluralité de creux et ledit bord étant au moins égale à 5% de la largeur WR du renflement.

10. Elément moulant selon la revendication précédente **caractérisé en ce que** la partie inférieure du renflement comprend en outre une pluralité de trous dans le fond des creux (23) pour mouler des brins sur le message.

## Patentansprüche

1. Reifenprofil für einen Reifen für ein Personenfahrzeug, aufweisend eine Lauffläche (2), die dazu bestimmt ist, während des Rollens des Reifens mit einem Boden in Kontakt zu kommen, wobei das Reifenprofil wenigstens einen inneren Hohlraum (7) von allgemein langgestreckter Form mit einer Gesamtlänge LC und einer Breite WC und einen Einschnitt (9) mit einer Breite von unter 2 mm umfasst, der seinen Ursprung teilweise oder zur Gänze in dem Hohlraum hat, wobei der Einschnitt diesen Hohlraum über seine gesamte Länge LC verlängert, indem er sich radial nach außen erstreckt, um in der Lauffläche zu münden, **dadurch gekennzeichnet, dass** der Hohlraum einen Boden (6) und zwei Seitenwände aufweist, die diesen Boden umgeben und sich in der Länge LC des Hohlraums erstrecken, wobei der Boden eine für einen Beobachter des Reifens bestimmte Nachricht (5) umfasst, wobei die Nachricht eine Gruppe von Symbolen ist, die eine Sinneinheit bilden, und dass die Nachricht von wenigstens einer Seitenwand (8) des Hohlraums beabstandet ist, wobei der Abstand zwischen der Nachricht (5) und der Seitenwand wenigstens gleich 5 % der Breite WC des Hohlraums beträgt und dass die Nachricht (5) ausgehend vom Boden (6) des Hohlraums vorragt, wobei die Nachricht dafür eingerichtet ist, durch eine Lamelle (15) einer Reifenform geformt zu werden, oder wobei die Nachricht (5) in den Boden (6) des Hohlraums geschnitten ist.

2. Reifenprofil nach Anspruch 1, **dadurch gekennzeichnet, dass** die Nachricht (5) eine Rauigkeit aufweist, die sich von der Rauigkeit des Bodens (6) des Hohlraums unterscheidet, so dass die Sichtbarkeit der Nachricht erhöht wird, um einen Kontrast zu diesem Boden zu bilden.

3. Reifenprofil nach einem der Ansprüche 1 oder 2, **dadurch gekennzeichnet, dass** die Nachricht (5) mehrere Adern aufweist, die dafür ausgelegt sind, die Sichtbarkeit der Nachricht zu erhöhen, um einen Kontrast zu dem Boden (6) des Hohlraums (7) zu bilden.

4. Reifenprofil nach einem der Ansprüche 1 bis 3, **dadurch gekennzeichnet, dass** die Nachricht (5) mehrere Löcher aufweist, die dafür ausgelegt sind, die Sichtbarkeit der Nachricht zu erhöhen, um einen Kontrast zu dem Boden (6) des Hohlraums (7) zu bilden.

5. Reifenprofil nach einem der Ansprüche 1 bis 4, **dadurch gekennzeichnet, dass** die Nachricht (5) farbig ist, um die Sichtbarkeit der Nachricht (5) zu erhöhen, um einen Kontrast zu dem Boden (6) des Hohlraums (7) zu bilden.

6. Reifenprofil nach einem der Ansprüche 1 bis 5, **dadurch gekennzeichnet, dass** die Nachricht (5) am Boden (6) des Hohlraums angeordnet ist, ohne sich radial im Lot zum Schnittpunkt (25) des Einschnitts (9) mit dem Hohlraum (7) zu befinden.

7. Reifenprofil nach einem der Ansprüche 1 bis 6, **dadurch gekennzeichnet, dass** der Einschnitt (9) einen Winkel (β) zwischen 45° und 60° zu einer Senkrechten zur Lauffläche bildet und durch einen Schnittpunkt des Einschnitts (9) mit dem Hohlraum (7) verläuft.

8. Reifenprofil nach einem der Ansprüche 1 bis 7, **dadurch gekennzeichnet, dass** das Reifenprofil wenigstens zwei Hohlräume (7) und einen Einschnitt (9) umfasst, der die Hohlräume (7) miteinander verbindet, wobei jeder Hohlraum (7) eine Nachricht (5) aufweist, wobei die Hohlräume radial in unterschiedlichen Abständen zur Lauffläche angeordnet sind, so dass die den Hohlräumen zugeordneten Nachrichten bei unterschiedlichen Abnutzungsgraden des Reifenprofils (2) auf dem Reifen erscheinen, wobei jede Nachricht eine Information liefert, die einem Abnutzungsgrad zugeordnet ist.

9. Formelement für eine Reifenform für ein Personenfahrzeug, aufweisend ein Reifenprofil, wobei das Formelement (15) eine Ausbauchung (19) von allgemein langgestreckter Form mit einer Gesamtlänge LR und einer Breite WR und eine Metallklinge (17) mit einer Breite von unter 2 mm umfasst, die im Bereich eines Endes der Klinge fest mit der Ausbauchung verbunden ist, wobei die Metallklinge die Ausbauchung im Bereich eines oberen Teils der Ausbauchung über ihre gesamte Länge LR verlängert, **dadurch gekennzeichnet, dass** die Ausbauchung des Formelements einen unteren Teil, der dem oberen Teil entgegengesetzt ist, und zwei seitliche Teile aufweist, die den unteren Teil umgeben und sich in der Länge LR der Ausbauchung erstrecken, wobei der untere Teil mehrere Vorsprünge oder mehrere Aushöhlungen (23) aufweist, die dazu bestimmt sind, in dem Reifenprofil des Reifens eine für einen Beobachter des Reifens bestimmte Nachricht zu formen, und dass die mehreren Vorsprünge (5a-5f) oder die mehreren Aushöhlungen von wenigstens einem Rand (22) des unteren Teils beabstandet sind, der durch den Schnittpunkt des unteren Teils mit einem seitlichen Teil der Ausbauchung gebildet wird, wobei der Abstand zwischen den mehreren Vorsprüngen oder den mehreren Aushöhlungen und dem Rand wenigstens gleich 5 % der Breite WR der Ausbauchung beträgt.

10. Formelement nach dem vorhergehenden Anspruch, **dadurch gekennzeichnet, dass** der untere Teil der Ausbauchung ferner mehrere Löcher im Boden der Aushöhlungen (23) umfasst, um Adern auf der Nachricht zu formen.

## Claims

1. Tyre tread for a passenger vehicle comprising a tread surface (2) designed to come into contact with a ground when the said tyre is running, the said tread comprising at least one internal cavity (7) of elongate overall shape with a total length LC and width WC and a sipe (9) less than 2 mm wide beginning partly or totally on the cavity, the said sipe extending this cavity over the whole of its length LC while extending radially outwards in order to emerge on the tread surface, **characterized in that** the cavity comprises a bottom (6) and two lateral walls surrounding this bottom and extending in the length LC of the cavity, the said bottom comprising a message (5) intended for an observer of the tyre, said message being a group of symbols forming a meaning unit, and **in that** the message is at a distance from at least one lateral wall (8) of the cavity, the distance between the message (5) and the said lateral wall being at least equal to 5% of the width WC of the cavity, and **in that** the message (5) protrudes from the bottom (6) of the cavity, said message being adapted to be moulded by a bar (15) of a mould for a tyre, or the message (5) is cut out in the bottom (6) of the cavity.

2. Tread according to Claim 1, **characterized in that** the message (5) has a roughness that differs from the roughness of the bottom (6) of the cavity so as to accentuate the visibility of the message in order to create a contrast relative to this bottom.

3. Tread according to either one of Claims 1 or 2, **characterized in that** the message (5) comprises a plurality of strands configured so as to accentuate the visibility of the message in order to create a contrast relative to the bottom (6) of the cavity (7).

4. Tread according to any one of Claims 1 to 3, **characterized in that** the message (5) comprises a plurality of holes configured so as to accentuate the visibility of the message in order to create a contrast relative to the bottom (6) of the cavity (7) .

5. Tread according to any one of Claims 1 to 4, **characterized in that** the message (5) is coloured so as to accentuate the visibility of the message (5) in order to create a contrast relative to the bottom (6) of the cavity (7).

6. Tread according to any one of Claims 1 to 5, **characterized in that** the message (5) is placed on the bottom (6) of the cavity without being radially level with an intersection (25) of the sipe (9) with the cavity (7).

7. Tread according to any one of Claims 1 to 6, **characterized in that** the sipe (9) makes an angle (β) of between 45° and 60° with a perpendicular to the tread surface and passing through a point of intersection of the sipe (9) with the cavity (7).

8. Tread according to any one of Claims 1 to 7, **characterized in that** the tread comprises at least two cavities (7) and one sipe (9) connecting the said cavities (7), each cavity (7) comprising a message (5), the cavities being placed radially at different distances from the tread surface so that the messages associated with the said cavities appear on the tyre at different rates of wear of the tread (2), each message giving an item of information associated with a rate of wear.

9. Moulding element for a mould for a passenger vehicle tyre comprising a tread, the said moulding element (15) comprising a bulge (19) of elongate overall shape with a total length LR and width WR and a metal strip (17) less than 2 mm wide secured to this bulge at one end of the said strip, the said metal strip extending the bulge over the whole of its length LR at an upper portion of the said bulge **characterized in that** the bulge of the moulding element comprises a lower portion opposite to the upper portion and two lateral portions surrounding the lower portion and extending in the length LR of the bulge, the said lower portion comprising a plurality of protuberances or a plurality of hollows (23) designed to mould a message in the tread of the tyre intended for an observer of the tyre and **in that** the plurality of protuberances (5a-5f) or the plurality of hollows is at a distance from at least one edge (22) of the lower portion formed by the intersection of the said lower portion with a lateral portion of the bulge, the distance between the plurality of protuberances or the plurality of hollows and the said edge being at least equal to 5% of the width WR of the bulge.

10. Moulding element according to the preceding claim, **characterized in that** the lower portion of the bulge also comprises a plurality of holes in the bottom of the hollows (23) in order to mould strands on the message.
